# EUROPEAN PATENT APPLICATION

(11) **EP 0 759 572 A1**
(43) Date of publication of application: **26.02.1997**
(21) Application number: 95113033.5
(22) Date of filing: 18.08.1995
(51) Int. Cl.: G02B 27/02

(54) **Virtual image display system with reduced ambient reflection and low radiation**

(71) Applicant: VIVITEK CO., LTD., Hsinchu (TW)
(72) Inventor: Chern, Mao-Jin, Rancho Palos Verdes, CA 90275 (US)
(74) Representative: Fuchs, Luderschmidt & Partner Patentanwälte

(57) **Abstract**

A virual image display system with reduced ambient reflection. The virtual image display system includes a black and white image source (105) for projecting a black and white image. The black and white image is then projected to a magnifying virtual image optical arrangement including a concave reflecting mirror (125). The magnifying virtual image optical arrangement and a color shutter (110) including a linear polarizer receive the black and white image to generate a magnified color virtual image. The virtual color image display system further includes a λ/4-plate (115) for cooperating with the color shutter including the linear polarizer to reduce an ambient reflection from the concave reflecting mirror.

## Description

### BACKGROUND OF THE INVENTION

### 1. Field of the Invention

This invention relates generally to the design and manufacture of a color display system. More particularly, this invention relates to an improved design and system configuration for a virtual image color display system incorporating a color shutter assembly and off-axis optical configuration wherein the ambient reflection is greatly reduced and high voltage power input is not required thus reduing power consumption and radiation from a color display system.

### 2. Description of the Prior Art

The application of large size color image display systems with high intensity bright colors are often limited by the concerns of high power consumption, higher level of radiation, and health hazards. Additionally, the 'ghost image' often interferes and adversely affects the visual performance. Even that high quality of optical performance is achieved in modem display systems, the undesirable effects caused by the ambient reflection with the ghost images continue to be a visually annoying problem. The use of a circular polarizer to reduce the ambient reflection is not adequate for modem high performance display systems.

Ziegler discloses in U.S. Patent 4,657,348 an optical arrangement to remove reflection from LCD display by employing a cover disk in front of the LCD. A quarter wave retarding foil is disposed on the liquid crystal cell. The cover disk includes a polarizer. The quarter wave foil cooperates with the polarizer to substantially remove the reflection from the light passing through the cover disk. Such technique imposes several limitations for modern display devices, particularly for the virtual image color display systems. Due to the blocking of the ambient reflection, the brightness of the image display is also reduced caused by the reduction of the image reflection by the polarizer and λ/4 retarding foil. Additionally, Ziegler's arrangement does not provide a solution for ambient reflection from strong overhead lights in modern offices.

In another U.S. Patent 5,278,532, Hegg et al. disclose a virtual image automotive instrument display system. Special shielding designs as that disclosed by Hegg et al. for automotive applications are not very useful for display systems where a larger image display are involved which are more vulnerable to ambient reflection due to the larger size of the viewing windows and the projection of overhead lights onto the screens on the widows.

In the art of designing and manufacturing virtual image color display systems, a need still exists for a novel system configuration and design method to more effective remove the ambient reflection.

### SUMMARY OF THE PRESENT INVENTION

It is therefore an object of the present invention to provide an optical design technique with novel system configuration for a virtual image display system to overcome the aforementioned difficulties and limitations encountered in the prior art.

Specifically, it is an object of the present invention to provide a high quality virtual image display system with reduced ambient reflection without unduly reducing the brightness of the image display.

Another object of the present invention is to provide a high quality virtual image display system with reduced reflection of the overhead lighting.

Another object of the present invention is to provide a virtual image display system capable of displaying large-size color images at high level of brightness without requiring the use of high power and high radiation image sources.

Briefly, in a preferred embodiment, the present invention comprises a virtual image display system with reduced ambient reflection. The virtual image display system includes a monochromatic image source for projecting a monochromatic image. The monochromatic image is then projected to a magnifying virtual image optical arrangement including a concave reflecting mirror. The magnifying virtual image optical arrangement and a color shutter including a circular polarizer receive the monochromatic image to generate a magnified color virtual image. The virtual color image display system further includes a λ/4-plate for cooperating with the color shutter including the circular polarizer to reduce an ambient reflection from the concave reflecting mirror.

These and other objects and advantages of the present invention will no doubt become obvious to those of ordinary skill in the art after having read the following detailed description of the preferred embodiment which is illustrated in the various drawing figures.

### BRIEF DESCRIPTION OF THE DRAWINGS

Fig. 1 is an optical system diagram showing a virtual image display system with reduced ambient reflection and low radiation according to the present invention; and
Fig. 2 is an optical system diagram showing another virtual image display system according to the present invention.

### DETAILED DESCRIPTION OF THE PREFERRED EMBODIMENT

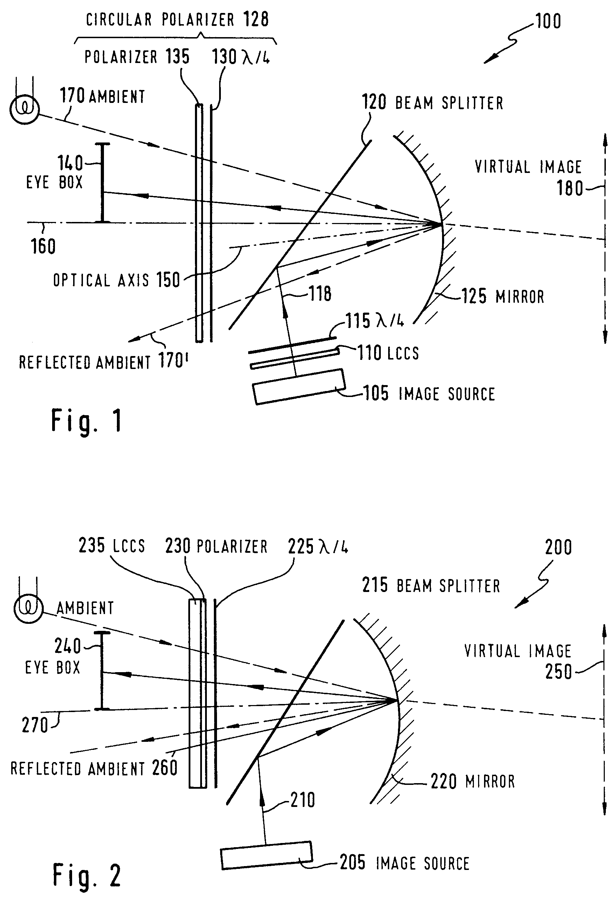

Fig. 1 is a system diagram of a virtual image display system 100 of the present invention for displaying an image received from a black and white image source 105 which may be a cathode ray tube (CRT), a liquid crystal display LCD), a field emission device, a deformable mirror device or other types of electro-optical image devices. The black and white (B/W) images from the image source 105 are projected to a color shutter 110 to covert the images into color images. One example of color shutter is a liquid crystal color shutter (LCCS) as described in U.S. Patent 4,631,051 or 4,582,396. Another example is a ferroelectric electro-optical shutter as described in another U.S. Patent. Both types of color shutters consists of electro-optical medium and polarizers. The image light transmitted through the shutter 110 is therefore a linearly polarized light. The linearly polarized light transmitted through the color shutter 110 passes through a λ/4 plate 115 for converting into a beam 118 with specific polarization. The polarized beam 118 is then reflected from a beam splitter 120 to project to a mirror 125 where it is reflected to pass through a circular polarizer 128 which includes a second λ/4 plate 130 and a linear polarizer 135 to reach an eye box 140. The beam splitter 120 and the mirror 125 are arranged in an off-axis manner such that the axis of reflection 150 for the processed image beam 118 is off axis and is about ten degree or less from the optical axis 160 of the mirror 125.

The light output from the image source 105 when passes through the polarizer of the liquid crystal color shutter (LCCS) 110 and the λ/4 plate 115, the light output becomes circularly polarized. As the circularly polarized beam 118 is reflected from the beam splitter 120 and the mirror 125, the handness of the polarization does not change. When the circular polarizer 128 is arranged to be in the same handness with the circularly polarized beam 118 reflected from the mirror 125, then the light beam will pass through the circular polarizer 128 without much attenuation. However, in entering the display system 100, the external ambient light 170 is circularly polarized in passing through the circular polarizer 128. As this ambient light 170 being reflected back from the mirror 125, the handness of polarization of the reflected ambient light 170' is changed. In exiting the display system 100, the reflected ambient light 170', is blocked by the circular polarizer 128. The ambient reflection, which often interferes with the magnified virtual image 180 displayed behind the mirror 125, is therefore greatly reduced.

Furthermore, since the reflecting mirror 125 is arranged slightly off axis, another source of interference coming from reflection of the overhead light is reduced. A strong ambient light which may often shine upon the display system 100 is form an overhead light which generally results in high intensity reflection back to a viewer's eyes when the optical path of the image reflection, i.e., the reflection of the circularly polarized beam 118, is arranged to be on-axis. By deliberately arranging the reflecting mirror 125 to be slightly off-axis with respect to the optical path of the image reflection, the ambient reflection of the overhead light is directed downward from the eye box 140 thus less likely to reach a viewer's eyes directly. In addition to the blocking effect of the circular polarizer 128 because of the handness of the polarization, the interference from the ambient reflection is further reduced with off-axis design.

Therefore, by incorporating the circular polarizer 128 in an off-axis configuration, the virtual image display system 100, is able to substantially reduce the ambient reflection and the reflection resulting from the overhead lights. A viewer is provided with a virtual image display system 100 which has much lower level of interferences than the conventional display systems. Meanwhile, an excellent image display with brightness suitable for high quality video system is achievable by the use of a low-radiation image source 105. This high level of image brightness for showing the images received from a low power and low radiation image source is achievable by the virtual image system 100 because the brightness of the image is not significantly attenuated by the circular polarizer 128 by utilizing the color shutter 110 with a λ/4 plate 115 in front of the black and white image source 105.

The present invention thus discloses a virtual image display system 100 with reduced ambient reflection. The virtual image display system 100 includes a monochromatic image source 105 for projecting a monochromatic image. The virtual image display system further includes a color shutter 110 for receiving the monochromatic image and converting the monochromatic image into a color image. The virtual image display system 100 further includes a first λ/4 plate 115 which cooperates with the color shutter 110 for circularly polarizing the color image. The virtual image display system 100 further includes a magnifying virtual image optical arrangement including a concave reflecting mirror 125 for receiving the color image for generating a magnified color virtual image. The virtual image display system further includes a circular polarizer 128 including a second λ/4-plate 130 for cooperating with the first λ/4 plate 115 and the color shutter 110 to allow the color image to pass through while reducing an ambient reflection from the concave reflecting mirror 125. In a preferred embodiment, the virtual image display system 100 further includes a viewing window 140 for an operator to view the magnified virtual color image. The circular polarizer 128 including the second λ/4 plate 130 are disposed on the back side of the view window 140. In another preferred embodiment, the color shutter 110 is a liquid crystal color shutter which further including liquid crystal cells and color polarizers. In yet another preferred embodiment of the virtual image display system 100, the color shutter is a ferroelectric color shutter which further including ferroelectric cells and color polarizers. In yet another preferred embodiment of the virtual image display system 100 the magnifying virtual image optical arrangement further includes a beam splitter 120 for reflecting the color image from the color shutter 110 and the first λ/4 plate 115 to the concave reflecting mirror 125 with a reflection axis which is an axis symmetrical to an incident and reflecting optical paths of the color image wherein the reflection axis deviates for an angle of ten degrees or less from an axis of the concave reflecting mirror.

Fig. 2 shows an another preferred embodiment of the present invention for a virtual image display system 200 which is characterized by employing a novel optical configuration including a color shutter and a λ/4 plate advantageously arranged in a specific manner to provide even higher image brightness while further reducing the ambient reflection. The virtual image display system 200 receives images to be displayed from an image source 205. The images from the image source are black and white images. The black and white image source may be a cathode ray tube (CRT), a liquid crystal display LCD), a field emission device, a deformable mirror device or other types of electro-optical image devices. The images projected as an image beam 210 to a beam splitter 215 and reflected by the beam splitter 215 to a mirror 220 which reflects the image beam 210 to a window assembly. The window assembly includes a λ/4 plate 225, and a color shutter (LCCS) 235 which including a linear polarizer 230 facing the λ/4 plate 225. The color shutter 235 converts the image beam 210 into color images before it reaches the eye box 240. A viewer looking inside the eye box 240 will see a magnified virtual image 250 in color behind the mirror 220. For this display system 200, the intensity of an external ambient light 260 is reduced to approximately to six percent of its original intensity in passing through the color shutter when entering the system 200. The ambient light 260 is converted to a circularly polarized light by the λ/4 plate 225 and the linear polarizer 230 in the color shutter assembly 235. The handness of the polarization for the ambient light 260 is changed in reflecting back from the mirror 220 which is then blocked by the λ/4 wave plate 225 and the polarizer 230 in exiting the system 200. The exiting residual ambient reflection of this virtual image display system is further reduced because the attenuation factor of the color shutter 235 in the window assembly. Thus the total reduction in ambient reduction is achieved by the circular polarizer in the window assembly, which includes the λ/4 wave plate 225 and the linear polarizer 230, as well as by the absorptive nature of the color shutter assembly 235 in the window. Furthermore, the brightness of the color display is also improved because the system employs only one polarizer 230 compared to two polarizers used in the system 100. Similar to the design of Fig. 1, the beam splitter 215 and the mirror 220 are arranged such that the optical axis of the image reflection for the image beam 250 is slightly off-axis from the axis 270 of the mirror 220. The viewer is less likely to be interfered with the reflection of the overhead light since the reflection of these lights is directed to be few degrees downward from the image reflection.

The present invention thus discloses a virtual image display system 200 with reduced ambient reflection. The virtual image display system includes a monochromatic image source 205 for projecting a monochromatic image. The monochromatic image is received by a magnifying virtual image optical arrangement which includes a concave reflecting mirror 220 to project the image to a λ/4 plate 225 and a color shutter 230 including a linear polarizer 230. The magnifying virtual image optical arrangement and the color shutter 235 receiving the monochromatic image for generating a magnified color virtual image. The λ/4-plate 225 cooperates with the color shutter 235 including the linear polarizer 230 to reduce an ambient reflection from the concave reflecting mirror 220. In a preferred embodiment of the virtual image display system 200, it further includes a viewing window 240 for an operator to view the magnified virtual color image. The λ/4 plate 225 and the color shutter 235 are disposed on the back side of the view window 240. In another preferred embodiment of the virtual image display system 200, the color shutter 230 is a liquid crystal color shutter which further including liquid crystal cells and color polarizers. In yet another preferred embodiment, the virtual image display system 200, the color shutter is a ferroelectric color shutter which further includes ferroelectric cells and color polarizers. In yet another preferred embodiment of the virtual image display system 200, the magnifying virtual image optical arrangement further includes a beam splitter 215 for reflecting the monochromatic image from the image source 205 to the concave reflecting mirror with a reflection axis which is an axis symmetrical to an incident and reflecting optical paths of the monochromatic image wherein the reflection axis deviates for an angle of ten degrees or less from an axis of the concave reflecting mirror 220.

The mirror 125 or 220 in the system 100 or 200 respectively can be configured as either spherical or aspherical. An aspherical design can improve optical performances caused by disparity or the distortion of the system.

The display systems as disclosed in the present invention has the advantages that same level of brightness and size of image display can be provided by the use of low radiation and low power image sources. such advantages can be achieved because the image sources, i.e., image sources 105 and 205, can be a small monochromatic image source which is then converted into color images by the use of color shutters. The smaller color images are then magnified to a larger display images through the application of the beam splitter and the mirror. The small monochromatic image source requires low anode voltage and power in operation and resulting in lower level of radiations. The system configuration thus provides a monitor for virtual display terminal which is safer to operate with its lower voltage requirements and causes less potential environmental and health hazards because the lower level of radiation during operation. Such systems may be most desirable for use as a desk top computer monitor or as a multi-media monitor which is likely to be operated for long hours. Particularly, the lower level of radiation may be a most desirable feature when electronic or TV games are to be played which may involve minors intensely viewing the display screen at close distance for long hours. Precaution to prevent health hazards due to radiation at close distance and safety concerns with high power operation may be resolved by a system according to the present invention.

Although the present invention has been described in terms of the presently preferred embodiment, it is to be understood that such disclosure is not to be interpreted as limiting. Various alternations and modifications will no doubt become apparent to those skilled in the art after reading the above disclosure. Accordingly, it is intended that the appended claims be interpreted as covering all alternations and modifications as fall within the true spirit and scope of the invention.

## Claims

1. A virtual image display system with reduced ambient reflection comprising:
a black and white image source for projecting a black and white image;
a magnifying virtual image optical arrangement including a concave reflecting mirror;
a color shutter including a linear polarizer;
said magnifying virtual image optical arrangement and said color shutter receiving said black and white image for generating a magnified color virtual image; and
a λ/4-plate for cooperating with said color shutter including said linear polarizer to reduce an ambient reflection from said concave reflecting mirror.

2. The virtual image display system of claim 1 further comprises:
a viewing window for an operator to view said magnified virtual color image; and
said λ/4 plate and said color shutter are disposed on the back side of said view window.

3. The virtual image display system of claim 2 wherein:
said color shutter is a liquid crystal color shutter which further including liquid crystal cells and color polarizers.

4. The virtual image display system of claim 2 wherein:
said color shutter is a ferroelectric color shutter which further including ferroelectric cells and color polarizers.

5. The virtual image display system of claim 2 wherein:
said magnifying virtual image optical arrangement further includes a beam splitter for reflecting said black and white image from said image source to said concave reflecting mirror with a reflection axis which is an axis symmetrical to an incident and reflecting optical paths of said monochromatic image wherein said reflection axis deviates for an angle of ten degrees or less from an axis of said concave reflecting mirror.

6. A virtual image display system with reduced ambient reflection comprising:
a black and white image source for projecting a black and white image;
a color shutter for receiving said monochromatic image and converting said monochromatic image into a color image;
a first λ/4 plate cooperating with said color shutter for circularly polarizing said color image;
a magnifying virtual image optical arrangement including a concave reflecting mirror for receiving said color image for generating a magnified color virtual image; and
a circular polarizer including a second λ/4-plate for cooperating with said first λ/4 plate and said color shutter to allow said color image to pass through while reducing an ambient reflection from said concave reflecting mirror.

7. The virtual image display system of claim 6 further comprises:
a viewing window for an operator to view said magnified virtual color image; and
said circular polarizer including said second λ/4 plate are disposed on the back side of said view window.

8. The virtual image display system of claim 7 wherein:
said color shutter is a liquid crystal color shutter which further including liquid crystal cells and color polarizers.

9. The virtual image display system of claim 7 wherein:
said color shutter is a ferroelectric color shutter which further including ferroelectric cells and color polarizers.

10. The virtual image display system of claim 7 wherein:
said magnifying virtual image optical arrangement further includes a beam splitter for reflecting said color image from said color shutter and said first λ/4 plate to said concave reflecting mirror with a reflection axis which is an axis symmetrical to an incident and reflecting optical paths of said color image wherein said reflection axis deviates for an angle of ten degrees or less from an axis of said concave reflecting mirror.
